(19) Europäisches Patentamt
European Patent Office
Office européen des brevets

(11) **EP 4 637 144 A1**

(12) **EUROPEAN PATENT APPLICATION**

(43) Date of publication:
**22.10.2025 Bulletin 2025/43**

(21) Application number: **24315168.5**

(22) Date of filing: **15.04.2024**

(51) International Patent Classification (IPC):
*H04N 19/12* [(2014.01)] *H04N 19/176* [(2014.01)]
*H04N 19/593* [(2014.01)] *H04N 19/61* [(2014.01)]
*H04N 19/119* [(2014.01)]

(52) Cooperative Patent Classification (CPC):
**H04N 19/176; H04N 19/119; H04N 19/12;**
**H04N 19/593; H04N 19/61**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **Galpin, Franck**
**35235 THORIGNE-FOUILLARD (FR)**
• **Dumas, Thierry**
**35700 RENNES (FR)**
• **Doyen, Didier**
**35510 CESSON-SEVIGNE (FR)**
• **Naser, Karam**
**35250 MOUAZE (FR)**

(74) Representative: **Rittner, Karsten**
**Rittner & Partner**
**Patentanwälte mbB**
**Schiffgraben 17**
**30159 Hannover (DE)**

(54) **VIRTUAL INTRA PREDICTION MODE EXTENSION**

(57)    Device, methods, and instrumentalities for extending virtual intra prediction mode. An example device for video decoding may obtain a prediction block of a video block. The device may determine a first direction associated with the prediction block and a second direction associated with the prediction block. The device may determine an inverse transform based on the first direction and the second direction. The device may perform inverse transform for the video block based on the inverse transform.

VIPM region 0

| VIMP region | 0 | 8 | 16 | ... |
|---|---|---|---|---|
| 0 | 0 | 1 | 0 | ... |
| 8 | 2 | 0 | 0 | ... |
| 16 | 3 | 1 | 3 | ... |
| ... | ... | ... | ... | ... |

VIPM region 1

**FIG. 10**

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

Systems, devices, and methods are described herein for extending virtual intra prediction mode (VIPM).

An example device for video decoding (e.g., a video decoder) may include a processor configured to perform one or more actions. For example, the device may obtain a prediction block of a video block. The device may determine a first direction associated with the prediction block and a second direction associated with the prediction block. The device may determine an inverse transform based on the first direction and the second direction. The device may perform inverse transform for the video block based on the inverse transform.

The device may determine a first region of the prediction block and a second region of the prediction block based, at least in part, on a prediction mode of the video block. The device may determine a first region of the prediction block and a second region of the prediction block based, at least in part, on a size of the video block. The first direction may be associated with the first direction. The second direction may be associated with the second region.

The device may determine the inverse transform based on the first direction and the second direction by obtaining a feature vector based on the first direction and the second direction; and determining the inverse transform based on the feature vector.

The device may determine a mapping between direction indices and inverse transform indices. The device may determine a first index indicative of a first inverse transform based on a first histogram of directions associated with the first region of the prediction block. The device may determine a second index indicative of a second inverse transform based on a second histogram of directions associated with the second region of the prediction block.

The device may obtain the prediction block of the video block by determining the prediction block based on a reference block of the video block. The device may determine a third direction associated with the prediction block and a fourth direction associated with the prediction block. On a condition that an angular difference between the third direction and the fourth direction is below a threshold, the device may select the third direction. The device may determine the inverse transform based on the first direction, the second direction, and the third direction.

The device may obtain a mapping between direction sets and inverse transform indices. The direction set may include a plurality of directions. The device may determine an inverse transform index based on the mapping and a direction set. The direction set may include the first direction and the second direction. The device may determine the inverse transform based on the inverse transform index.

The device may obtain a mapping between direction sets and candidate inverse transform index lists. A direction set may include a plurality of directions. The device may obtain an inverse transform candidate index for the video block. The device may determine a candidate inverse transform index list for the video block based on the mapping and a direction set (e.g., that includes the first direction and the second direction). The device may select the inverse transform from the candidate inverse transform index list based on the inverse transform candidate index.

An example device for video encoding (e.g., a video encoder) may obtain a prediction block of a video block. The device may determine a first direction associated with the prediction block and a second direction associated with the prediction block. The device may select a transform based on the first direction and the second direction. The device may perform transform for the video block based on the transform.

The device may determine a first region of the prediction block and a second region of the prediction block based, at least in part, on a prediction mode of the video block. The device may determine a first region of the prediction block and a second region of the prediction block based, at least in part, on a size of the video block. The first direction may be associated with the first direction. The second direction is associated with the second region.

The device may select the transform (e.g., based on the first direction and the second direction) by obtaining a feature vector based on the first direction and the second direction; and selecting the transform based on the feature vector.

The first direction may be associated with a first region of the prediction block. The second direction may be associated with a second region of the prediction block. The device may determine a mapping between direction indices and transform indices. The device may determine a first index indicative of a first transform based on a first histogram of directions associated with the first region of the prediction block. The device may determine a second index indicative of a second transform based on a second histogram of directions associated with the second region of the prediction block.

The device may obtain the prediction block of the video block by determining the prediction block based on a reference block of the video block.

The device may determine a third direction associated with the prediction block and a fourth direction associated with the prediction block. On a condition that an angular difference between the third direction and the fourth direction is below a threshold, the device may select the third direction. The device may select the transform based on the first direction and the second direction is further based on the third direction.

The device may obtain a mapping between direction sets and transform indices. A direction set may include a plurality of directions. The device may determine a transform index based on the mapping and a direction set (e.g., that includes the first direction and the second direction). The device may select the transform based on the transform index.

The device may obtain a mapping between direction sets and candidate transform index lists. The direction set may include a plurality of directions. The device may determine a candidate transform index list for the video block based on the mapping and a direction set (e.g., that includes the first direction and the second direction). The device may obtain a transform candidate index for the video block. The device may select the transform from the candidate transform index list based on the transform candidate index.

## BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 is a diagram showing an example block-based video encoder.

FIG. 3 is a diagram showing an example video decoder.

FIG. 4 is a diagram showing an example of a system in which various aspects and examples may be implemented.

FIG. 5 illustrates an example of matrix-based intra prediction (MIP) prediction samples for building a histogram of gradients (HoG).

FIG. 6 illustrates an example of multi-direction computation.

FIG. 7 illustrates an example of splitting a region depending on the mode.

FIG. 8 illustrates an example reduced histogram from local directions.

FIG. 9 illustrates an example of splitting the inter prediction of a block for virtual intra prediction mode (VIPM) derivation.

FIG. 10 illustrates an example mapping between VIPM and a low frequency non-separable transform (LFNST) or non-separable primary transform (NSPT) index for a direction.

FIG. 11 illustrates an example mapping between VIPM and an LFNST or NSPT index for two directions.

FIG. 12 illustrates an example of a multi-transform unit (multi-TU) transform.

## DETAILED DESCRIPTION

A detailed description of illustrative embodiments will now be described with reference to the various Figures.

Although this description provides a detailed example of possible implementations, it should be noted that the details are intended to be exemplary and in no way limit the scope of the application.

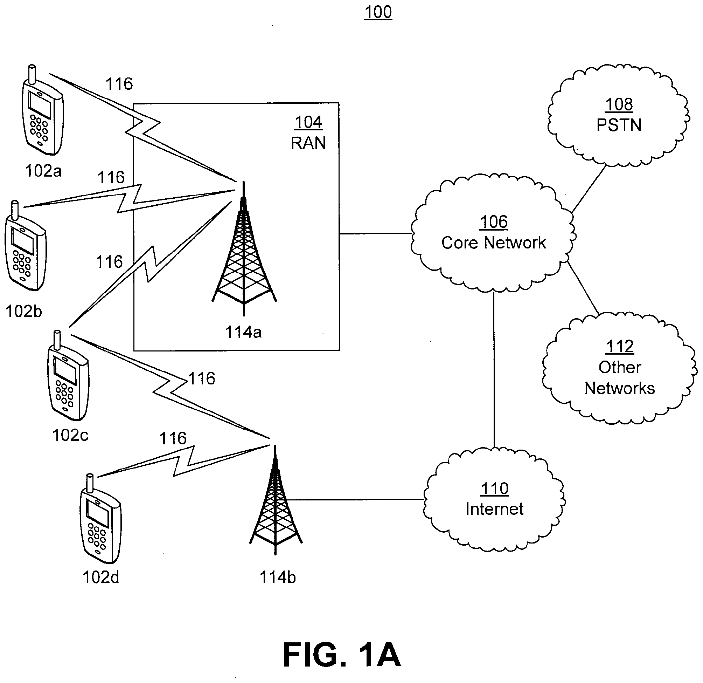

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

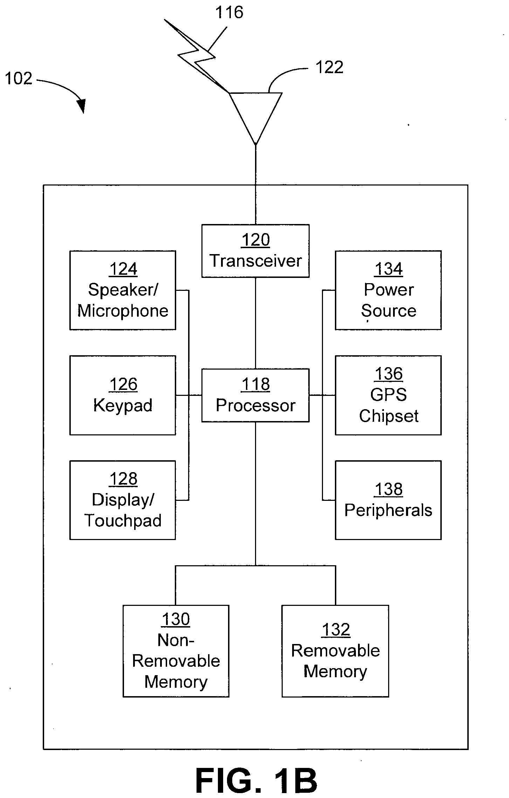

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

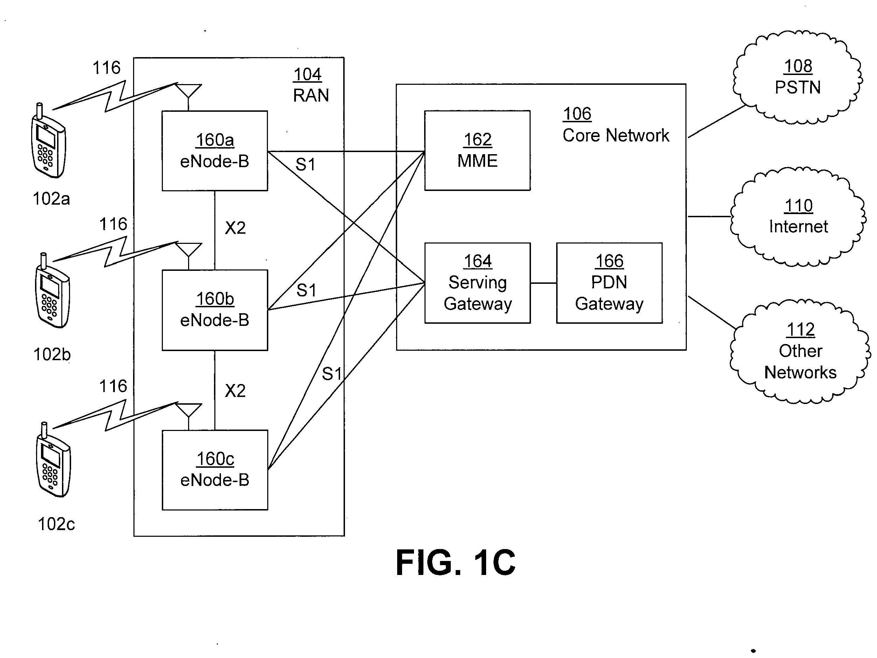

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102cwith access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11 ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

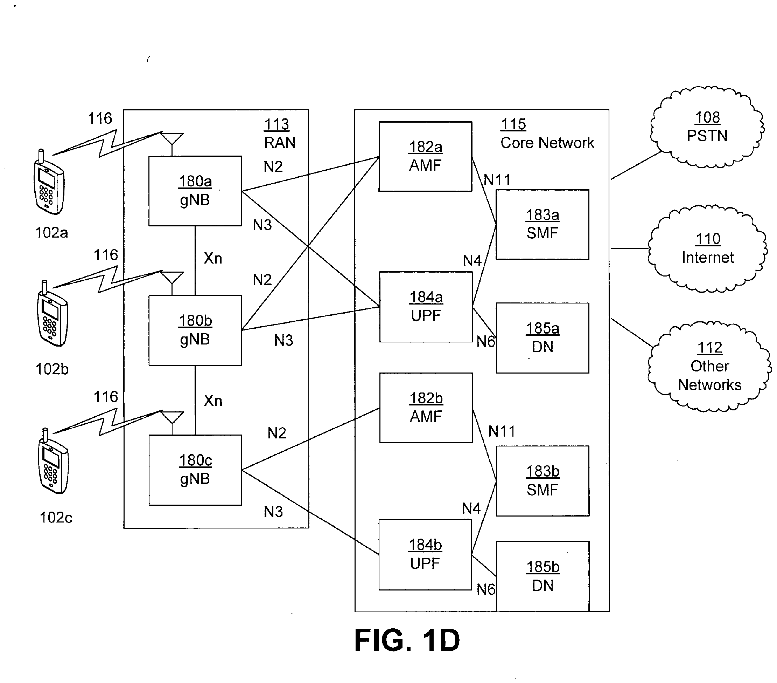

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples or embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

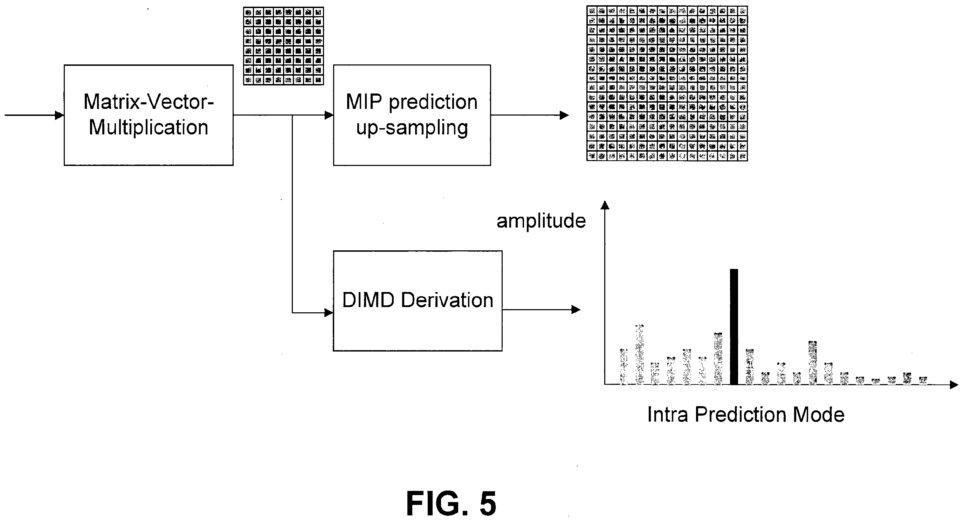

The aspects described and contemplated in this application may be implemented in many different forms. FIGS. 5-12 described herein may provide some embodiments, but other embodiments are contemplated. The discussion of FIGS. 5-12 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

The terms HDR (high dynamic range) and SDR (standard dynamic range) may be used in this disclosure. Those terms often convey specific values of dynamic range to those of ordinary skill in the art. However, additional embodiments are also intended in which a reference to HDR is understood to mean "higher dynamic range" and a reference to SDR is understood to mean "lower dynamic range." Such additional embodiments are not constrained by any specific values of dynamic range that might often be associated with the terms "high dynamic range" and "standard dynamic range."

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

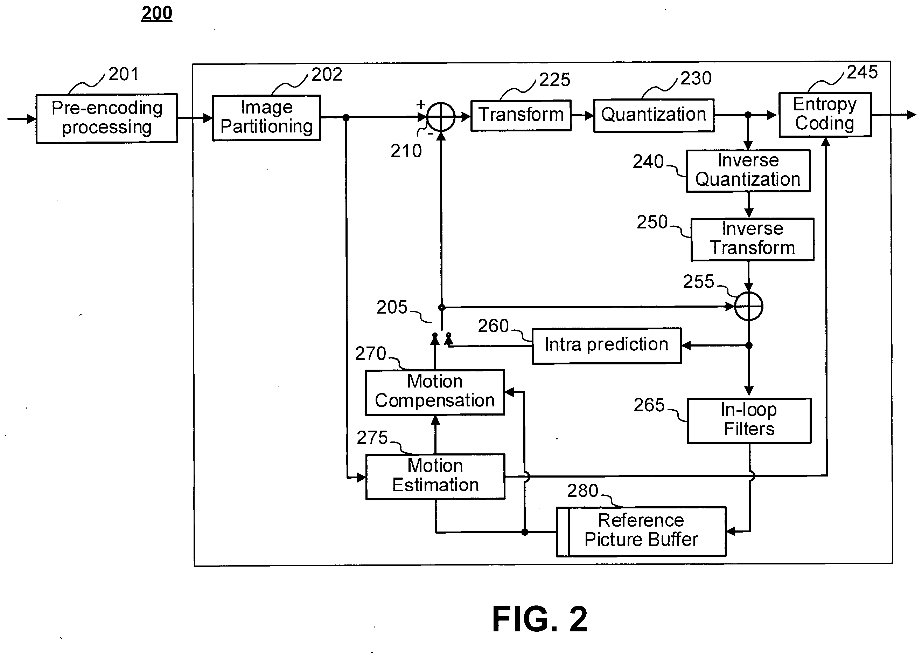

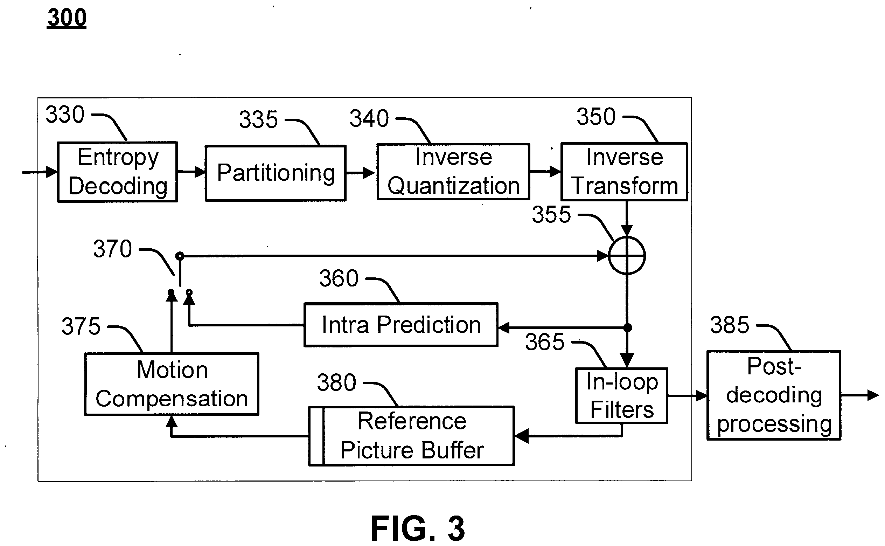

Various methods and other aspects described in this application may be used to modify modules, for example, intra prediction and entropy coding and/or decoding modules (260, 360, 245, 330), of a video encoder 200 and decoder 300 as shown in FIG. 2 and FIG. 3, respectively. Moreover, the subject matter disclosed herein presents aspects that are not limited to VVC or HEVC, and may be applied, for example, to any type, format or version of video coding, whether described in a standard or a recommendation, whether pre-existing or future-developed, and extensions of any such standards and recommendations (e.g., including VVC and HEVC). Unless indicated otherwise, or technically precluded, the aspects described in this application may be used individually or in combination.

Various numeric values are used in examples described the present application, such as coefficients, block sizes, etc. These and other specific values are for purposes of describing examples and the aspects described are not limited to these specific values.

FIG. 2 is a diagram showing an example video encoder (e.g., an example block-based hybrid video encoder) 200. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder 300. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). For a given picture, the contents of the reference picture buffer 380 on the decoder 300 side may be identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

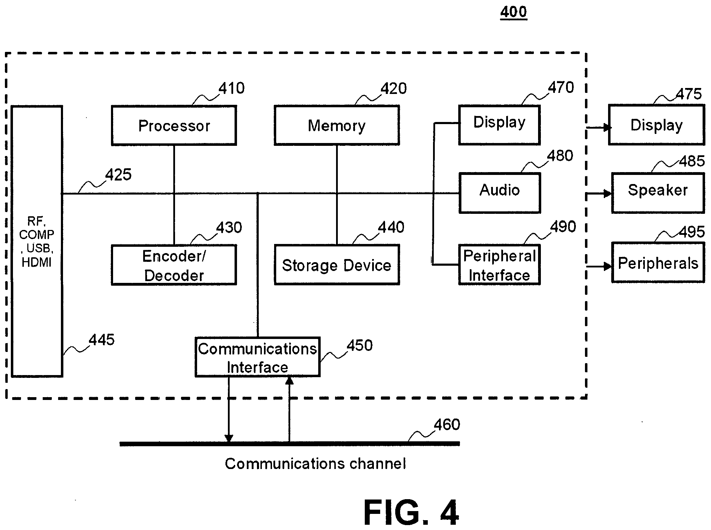

FIG. 4 is a diagram showing an example of a system in which various aspects and embodiments described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various embodiments, the system 400 is communicatively coupled to one or more other systems, or other electronic devices, via, for example, a communications bus or through dedicated input and/or output ports. In various embodiments, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various embodiments, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 410 and/or the encoder/decoder module 430 is used to store instructions and to provide working memory for processing that is needed during encoding or decoding. In other embodiments, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as, for example, MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia interface (HDMI) input terminal. Other examples, not shown in FIG. 4, include composite video.

In various embodiments, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the data stream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various embodiments, using a wireless network such as a Wi-Fi network, for example IEEE 802:11 (IEEE refers to the Institute of Electrical and Electronics Engineers). The Wi-Fi signal of these examples is received over the communications channel 460 and the communications interface 450 which are adapted for Wi-Fi communications. The communications channel 460 of these embodiments is typically connected to an access point or router that provides access to external networks including the Internet for allowing streaming applications and other over-the-top communications. Other embodiments provide streamed data to the system 400 using a set-top box that delivers the data over the HDMI connection of the input block 445. Still other embodiments provide streamed data to the system 400 using the RF connection of the input block 445. As indicated above, various embodiments provide data in a non-streaming manner. Additionally, various embodiments use wireless networks other than Wi-Fi, for example a cellular network or a Bluetooth network.

The system 400 can provide an output signal to various output devices, including a display 475, speakers 485, and other peripheral devices 495. The display 475 of various embodiments includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples of embodiments, one or more of a stand-alone digital video disc (or digital versatile disc) (DVR, for both terms), a disk player, a stereo system, and/or a lighting system. Various embodiments use one or more peripheral devices 495 that provide a function based on the output of the system 400. For example, a disk player performs the function of playing the output of the system 400.

In various embodiments, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various embodiments, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various embodiments in which the display 475 and speakers 485 are external components, the output signal may be provided via dedicated output connections, including, for example, HDMI ports, USB ports, or COMP outputs.

The embodiments may be carried out by computer software implemented by the processor 410 or by hardware, or by a combination of hardware and software. As a non-limiting example, the embodiments may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, obtaining a prediction block of a video block; determining a first direction associated with the prediction block and a second direction associated with the prediction block; determining an inverse transform based on the first direction and the second direction; and performing inverse transform for the video block based on the inverse transform, etc. A block may be, for example, a coding block.

As further embodiments, in one example "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, obtaining a prediction block of a video block; determining a first direction associated with the prediction block and a second direction associated with the prediction block; selecting a transform based on the first direction and the second direction; and performing transform for the video block based on the transform, etc. A block may be, for example, a coding block.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment," "an embodiment," "an example," "one implementation" or "an implementation," as well as other variations thereof, means that a particular feature, structure, characteristic, and so forth described in connection with the embodiment is included in at least one embodiment. Thus, the appearances of the phrase "in one embodiment," "in an embodiment," "in an example," "in one implementation," or "in an implementation", as well any other variations, appearing in various places throughout this application are not necessarily all referring to the same embodiment or example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Many embodiments are described herein. Features of embodiments may be provided alone or in any combination, across various claim categories and types. Further, embodiments may include one or more of the features, devices, or aspects described herein, alone or in any combination, across various claim categories and types. For example, features described herein can be implemented in a bitstream or signal that includes information generated as described herein. The information can allow a decoder to decode a bitstream, the encoder, bitstream, and/or decoder according to any of the embodiments described. For example, features described herein can be implemented by creating and/or transmitting and/or receiving and/or decoding a bitstream or signal. For example, features described herein can be implemented a method, process, apparatus, medium storing instructions, medium storing data, or signal. For example, features described herein can be implemented by a TV, set-top box, cell phone, tablet, or other electronic device that performs decoding. The TV, set-top box, cell phone, tablet, or other electronic device can display (e.g., using a monitor, screen, or other type of display) a resulting image (e.g., an image from residual reconstruction of the video bitstream). The TV, set-top box, cell phone, tablet, or other electronic device can receive a signal including an encoded image and perform decoding.

Feature(s) associated with using a virtual intra prediction mode (VIPM) to derive transform set are provided herein.

A virtual intra prediction mode (VIPM) may be employed for an inter-coded block. A VIPM (e.g., each VIPM) may represent a kind of feature, for example, a specific (e.g., dominant) direction. The VIPM may be derived by applying a DIMD-like process (e.g., which may be used in MIP and IntraTMP) to the inter prediction block. The horizontal and vertical gradients of pixels inside the prediction block may be calculated (e.g., with a Sobel operator). The horizontal and vertical gradients of a pixel (e.g., each pixel) may be used to fill a histogram of oriented gradients (HoG). For example, the horizontal and vertical gradients computed for pixel of the inter-prediction block may be used to compute the index of the directional intra prediction mode associated with the prediction that gives rise to this gradient. In the HoG, the bin of the computed index may be incremented by the absolute gradient. The intra prediction mode associated with the index that corresponds to the HoG bin of largest magnitude may be selected as the VIPM.

The index of the selected VIPM may map to the transform set index of low frequency non-separable transform/non-separable primary transform (LFNST/NSPT). For inter coding, kernel mapping may be performed in the same or a similar manner as that for intra LFNST/NSPT.

Feature(s) associated with decoder-side intra mode derivation (DIMD) are provided herein.

When DIMD is applied, one or more (e.g., up to five) intra modes may be derived from the reconstructed neighbor samples (e.g., by analyzing the directionality of the content in the surrounding of the current block). The (e.g., five) predictors may be combined with the planar mode predictor (e.g., with the weights derived from an HoG). The HoG may be computed on an L-shaped template (e.g., a three-sample wide/high L-shaped template) formed of already reconstructed samples, as illustrated in FIG. 5. The template may be obtained using a Sobel filter (e.g., accumulating the magnitudes of all gradients at a given direction, for the samples within the gray region in FIG. 5). The directions with highest cumulative magnitude may be selected as main and secondary DIMD modes. The predictors obtained with the DIMD modes may be blended to form the final DIMD prediction. Uniform or spatial blending may be used (e.g., where the DIMD predictors are combined with a Planar predictor, for example, using weights that depend on the relative magnitudes of the modes in the histogram of gradients).

The division operations in weight derivation may be performed utilizing the same lookup table (LUT) based integerization scheme used by the CCLM. A division operation in the orientation calculation may be expressed as:

$$Orient = G_y/G_x$$

The division operation in the orientation calculation may be computed by the following LUT-based scheme:

$$x = \text{Floor}(\text{Log2}(Gx))$$

$$\text{normDiff} = ((Gx << 4) >> x)\ \&\ 15$$

$$x += (3 + (\text{normDiff} \mathrel{!=} 0)\ ?\ 1 : 0)$$

$$\text{Orient} = (Gy * (\text{DivSigTable}[\text{normDiff}] \mid 8) + (1 << (x-1))) >> x$$

The following may depict (e.g., possible) values for DivSigTable.

$$\text{DivSigTable}[16] = \{0, 7, 6, 5, 5, 4, 4, 3, 3, 2, 2, 1, 1, 1, 1, 0\}$$

For a block of size $W \times H$, the weight for a derived mode (e.g., each of the five derived modes) may be modified, for example, if one of the above or left histogram magnitudes is two times larger than the other one. In this case, the weights may be location dependent. The weights may be computed. Weights may be calculated in accordance with the following equation, for example, if the above histogram is twice the left histogram:

$$w_i(x, y) = wDimd_i + \Delta_i - 2\Delta_i \frac{y}{(H-1)}$$

Weights may be calculated in accordance with the following equation, for example, if the left histogram is twice the above histogram:

$$w_i(x, y) = wDimd_i + \Delta_i - 2\Delta_i \frac{x}{(W-1)}$$

wherein $wDimd_i$ may be the unmodified uniform weight of the DIMD and $\Delta_i$ may be pre-defined (e.g., set to 10).

Derived intra modes may be included in the primary list of intra most probable modes (MPM). The DIMD process may be performed before the MPM list is constructed. The primary derived intra mode of a DIMD block may be stored with a block. The primary derived intra mode may be used for MPM list construction of the neighboring blocks.

The region of neighboring reconstructed samples (e.g., used for computing the histogram of gradients) may depend on reconstructed samples availability. The region of decoded reference samples of current WxH luma CB may extend towards the above-right side (e.g., if available, up to W additional columns). The region of decoded reference samples of current WxH luma CB may extend towards the bottom-left side (e.g., if available, up to H additional rows).

A DIMD histogram may be computed.

The histogram may be computed by using horizontal and vertical Sobel filters on pixels in a template (e.g., of width 3) around the block. For example, for a (e.g., each) pixel, the following filters may be applied:

$$Gy = \begin{matrix} 1 & 2 & 1 \\ 0 & 0 & 0 \\ -1 & -2 & -1 \end{matrix}$$

$$Gx = \begin{matrix} 1 & 0 & -1 \\ 2 & 0 & -2 \\ 1 & 0 & -1 \end{matrix}$$

If both $Gy$ and $Gx$ are not zero, the orientation of the current pixel is computed as:

$$\text{Orient} = G_y / G_x$$

Otherwise, if Gy is zero, the orientation may be computed/considered as vertical. Otherwise, the orientation may be computed/considered as horizontal.

The histogram may be computed by summing the values (e.g., summing up all values) of an (e.g., each) orientation. The histogram may not show whether the template has no orientation. For example, DIMD may not output DC or planar mode.

Feature(s) associated with virtual intra mode for transform (e.g., sometimes referred to as DIMD) are provided herein.

For blocks using matrix-based intra prediction (MIP), template matching prediction (TMP), or extrapolation-based intra prediction (EIP), the LFNST set index may be derived as follows. DIMD may be used to derive the intra prediction mode of the current block (e.g., based on the MIP or TMP or EIP predicted samples). For MIP, the intra prediction mode derivation may be performed before up-sampling. For example, a horizontal gradient and a vertical gradient may be calculated for a (e.g., each) predicted sample to build a HoG, as shown in FIG. 5. The intra prediction mode with the largest histogram amplitude values may be used to determine the LFNST transform set and/or LFNST transpose flag.

FIG. 5 illustrates an example of MIP prediction samples to build an HoG.

Feature(s) associated with multi-transform selection (MTS) are provided herein.

For blocks predicted via TMP, DIMD may be used on the prediction block to derive an intra mode that is used for transform selection. For example, a horizontal gradient and a vertical gradient may be calculated for a (e.g., each) predicted sample to build a HoG. The intra prediction mode with the largest histogram amplitude values may be used to determine the MTS transform set.

Feature(s) associated with inter LFNST/NSPT with virtual intra modes are provided herein.

LFNST may be an example transform coding tool. LFNST may be enhanced with more transform sets for a finer granularity of directions (e.g., from 4 to 35). LFNST may be enhanced with more transform kernels in a (e.g., each) set (e.g., from 2 to 3). Larger kernels may be introduced for large blocks.

NSPT may be used (e.g., to replace the separable DCT-II plus LFNST transform combinations) for the block shapes of 4x4, 4x8/8x4, 4x16/16x4, 8x8, 8x16/16x8, 4x32/32x4, and 8x32/32x8. The kernel mapping used for intra prediction mode may be the same as, or similar to, the kernel mapping used for LFNST.

Inter MTS may be enabled. DST-VII and DCT-VIII may be replaced by separable Karhunen-Loève Transform (KLT) for small blocks. LFNST/NSPT may be applied to intra coded blocks (e.g., only intra coded blocks). LFNST/NSPT may not be used for inter coded blocks. One or more (e.g., some) inter prediction residuals may exhibit directional features. LFNST/NSPT may be efficient (e.g., more efficient) in dealing with directional features. LFNST/NSPT may be adapted for inter coded blocks.

To utilize LFNST/NSPT for inter coding, a VIPM may be employed. A VIPM (e.g., each VIPM) may represent a feature, for example, a specific direction. The VIPM may be derived by applying a DIMD-like process (e.g., which may be used in MIP and TMP and EIP) to the inter prediction block. The horizontal and vertical gradients of pixels inside the prediction block may be calculated with a Sobel operator. The horizontal and vertical gradients of a pixel (e.g., each pixel) may be used to derive a direction. The amplitudes of the gradient of each pixel may be accumulated for the corresponding direction. The intra prediction mode corresponding to the strongest accumulation may be selected as the VIPM. With the VIPM, the transform set of LFNST/NSPT may be derived. For inter coding, kernel mapping may be performed in the same or a similar manner as that for intra LFNST/NSPT.

The distribution of inter the LFNST/NSPT index may be different from that of the intra LFNST/NSPT index. The signaling of the inter LFNST/NSPT index may be different from that of the intra LFNST/NSPT index. The intra LFNST/NSPT index binarization may use bins (e.g., two context-coded bins) for a symbol (e.g., each symbol). Truncated unary code (e.g., with different context models) may be used for inter LFNST/NSPT index coding.

Feature(s) associated with a geometric partitioning mode (GPM) are provided herein.

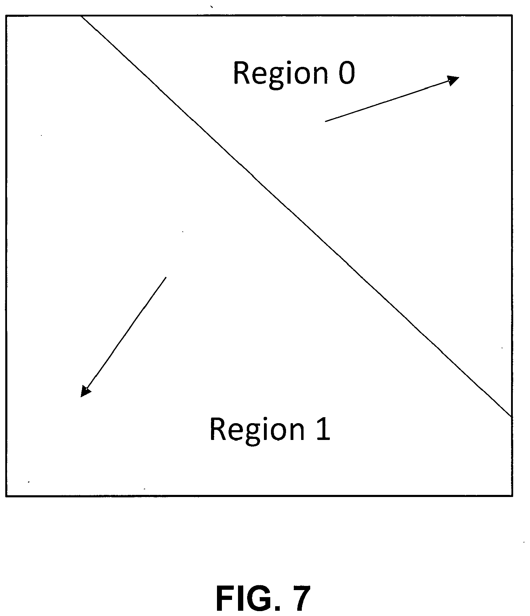

The GPM may feature 64 partitions (e.g., in total) for inter prediction. If the GPM is used, a CU may be split into two partitions by a geometrically located straight line (e.g., as shown in FIG. 7). A partition (e.g., each partition) in the CU may be inter-predicted using its associated (e.g., its own) motion parameters. Uni-prediction (e.g., only uni-prediction) may be allowed for a (e.g., each) partition. For example, a partition (e.g., each partition) may have a (e.g., one) motion vector (MV) and a (e.g., one) reference index. The sample values along the splitting edge may be adjusted (e.g., after predicting each of the partitions) using blending with adaptive weights.

A VIPM may be employed for an inter coded block. The mapping between the direction and the transforms may be the same as the mapping used for intra blocks if the direction is derived from the template. For inter block coding, the number of available pixels to derive the direction may be larger and/or more advanced block content to transforms mapping may be computed.

The direction computation inside a block may be extended. For example, one or more (e.g., several) directions may be computed. The directions may be computed by sub-block inside the block. A feature vector may be computed on the block. Directions/feature distribution may depend on the block mode (e.g., GPM).

Mapping between the advanced directions and the transform index may be deduced. For example, direct mapping may be learned offline. A list of best transform ranked may be learned offline. In this case, an index may be transmitted inside the ranked list. The mapping may use more advanced algorithms (e.g., a support vector machine (SVM)). In this case, a mapping between the features vector and the class/index of the transforms may be learned offline.

The advanced directions may be used to learn new transforms. For a class (e.g., for each class) of the directions descriptor, a set of primary/secondary transforms may be learned offline.

Feature(s) associated with VIPM direction extension are provided herein. Feature(s) associated with multi-direction extension are provided herein. The computation of the directions may be extended. As used here, a "video block" may refer to an intra block, and a "prediction block" may include a template of the video block.

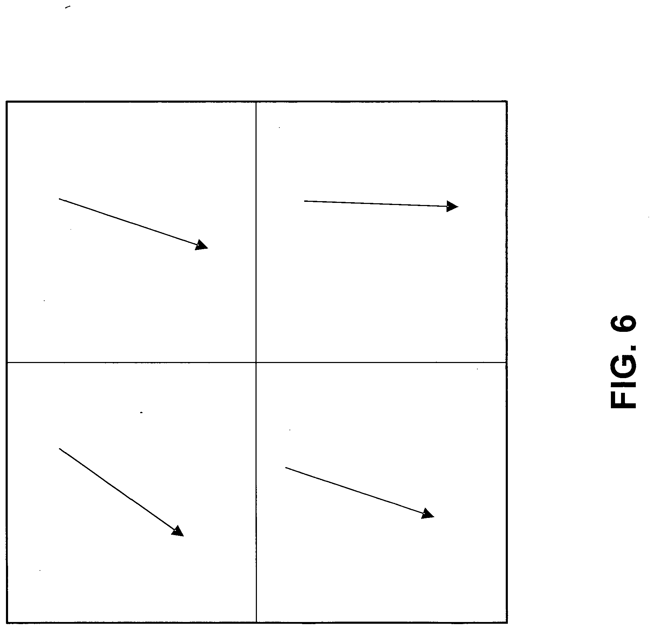

FIG. 6 illustrates an example of multi-directions computation.

The block may be split into two or more (e.g., several) regions and a direction may be computed for a (e.g., each) region, as shown in FIG. 6 (e.g., instead of computing one direction using the VIPM method). For example, a video encoder may obtain a prediction block of a video block. The video encoder may determine a first direction associated with the prediction block and a second direction associated with the prediction block. The video encoder may select a transform based on the first direction and the second direction. The video encoder may perform transform for the video block based on the transform.

Similarly, a video decoder may obtain a prediction block of a video block. The decoder may determine a first direction associated with the prediction block and a second direction associated with the prediction block. The decoder may determine an inverse transform based on the first direction and the second direction. The decoder may perform inverse transform for the video block based on the inverse transform.

The encoder (or decoder) may obtain a mapping between direction sets and transform (or inverse transform) indices. A direction set may include a plurality of directions. The encoder (or decoder) may determine a transform (or inverse transform) index based on the mapping and a direction set that includes the first direction and the second direction. The encoder (or decoder) may determine the transform (or inverse transform) based on the transform (or inverse transform) index.

The split of the block may depend on the block size. The encoder/decoder may determine a first region of the prediction block and a second region of the prediction block based, at least in part, on a size of the video block. The first direction may be associated with the first direction. The second direction may be associated with the second region. For example, the split may be performed (e.g., only performed) if the block is larger than a given size (e.g., for a size greater than 16). The split may be performed if the block includes at least n samples (e.g., where n=256, n=128, n=512, and/or the like).

For a given rectangular block, the split criteria may be applied (e.g., independently) on a (e.g., each) direction. For example, it may be assumed that the split of a rectangular block will (e.g., must) yield 16x16 sub-blocks. In this case, the split of a 32x16 block may correspond to the vertical split of this block (e.g., yielding two 16x16 blocks). As another example, the split of a 64x16 block may correspond to the vertical split of this block (e.g., yielding four 16x16 blocks). As another example, the split of a 16x64 block may correspond to the horizontal split of this block (e.g., yielding four 16x16 blocks).

Regions may be evaluated per mode. The region split may depend on the prediction mode of the block. The encoder/decoder may determine a first region of the prediction block and a second region of the prediction block based, at least in part, on a prediction mode of the video block. For example, if a block uses the GPM (e.g., triangular mode), the regions may be split to be included inside the regions of the prediction mode (e.g., as shown in FIG. 7).

FIG. 7 illustrates region split depending on the mode. The encoder/decoder may obtain a mapping between direction sets and candidate inverse transform index lists. A direction set may include a plurality of directions. The encoder (or decoder) may determine a candidate transform (or inverse transform) index list for the video block based on the mapping and a direction set (e.g., that includes the first direction and the second direction). The encoder (or decoder) may obtain a transform (or inverse transform) candidate index for the video block. The encoder (or decoder) select the transform (or inverse transform) from the candidate transform (or inverse transform) index list based on the transform (or inverse transform) candidate index.

The decision of splitting a given block may depend on the inter prediction mode selected to predict this block (e.g., even if the inter prediction mode itself does not yield any split of the block). For example, a given block of size larger than 16x16 may be split into 16x16 sub-blocks if its selected inter prediction mode is not Affine. As another example, a given block of size larger than 8x8 may be split into 8x8 sub-blocks if its selected inter prediction mode is neither Affine nor combined intra/inter prediction (CIiP).

Feature descriptor(s) may be extended.

A feature vector may be used (e.g., directly, for example, instead of using VIPM to index the transform indexes). For example, the encoder (or decoder) may determine the transform (or inverse transform) based on the first direction and the second direction by: obtaining a feature vector based on the first direction and the second direction; and selecting/-determining the transform (or inverse transform) based on the feature vector.

An HoG may be used. For example, the same or a similar process as VIPM (e.g., to create the histogram) may be used. The number of bins in the histogram may be adapted to have the size of the descriptor. For example, the number of bins may be 8 (e.g., which may mean that the directions/angles space is split into 8 regions).

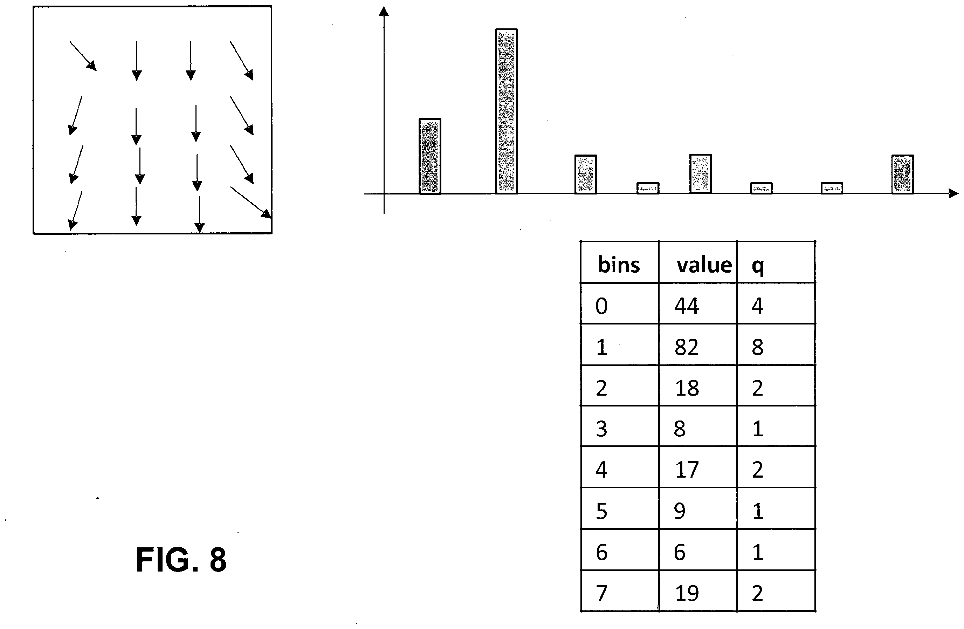

FIG. 8 illustrates an example of a reduced histogram from local directions.

As illustrated in FIG. 8, the local directions may be put inside a reduced histogram (e.g., with 8 bins only). The values may be accumulated in the histogram. After each value has been accumulated in the histogram, the values may be quantized (e.g., the quantizer may be 10). The final vector of quantized values may form a descriptor for the block.

The histogram may be created/done per region, as described herein (e.g., ending in a vector of N sub-vectors). For example, the encoder (or decoder) may determine a first index indicative of a first transform (or inverse transform) based on a first histogram of directions associated with the first region of the prediction block. The encoder (or decoder) may determine a second index indicative of a second transform (or inverse transform) based on a second histogram of directions associated with the second region of the prediction block.

The encoder/decoder may determine the prediction block based on a reference block of the video block. Regions may follow the split of a reference block. For example (e.g., for a given block with inter prediction involving motion compensation of at least one reference block), the split of the block into regions may follow the split of a sub-block inside a reference block (e.g., inside the at least one reference block) if the prediction mode of this sub-block implies splitting.

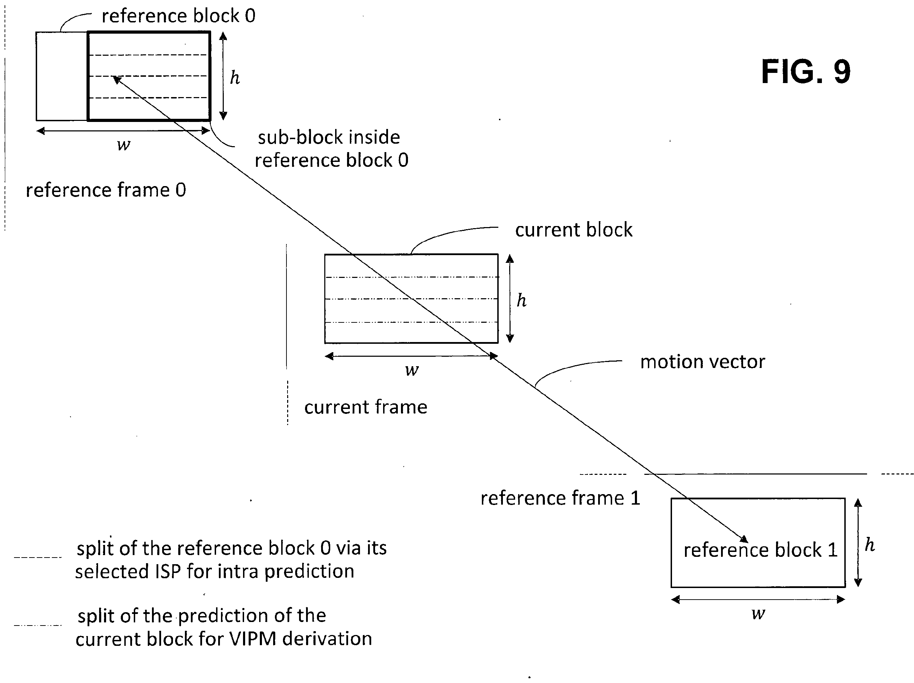

For example, if a given block selects bi-directional prediction and an associated reference block (e.g., one of its reference blocks) includes a sub-block selecting intra sub-partition (ISP) for prediction, the block may be split following the ISP split selected by the sub-block inside the used reference block. For example, in FIG. 9, the current w × h block may select bi-directional prediction (e.g., involving the reference block 0 and the reference block 1). The reference block 0 may be in the reference frame 0. The reference block 1 may be inside the reference frame 1. The reference block 0 may include (e.g., at least partially include) a sub-block. The sub-block may be split horizontally via ISP (e.g., into 4 equal-sized sub-partitions). The inter prediction of the current block may be split horizontally (e.g., into 4 equal-sized sub-partitions) for VPIM derivation.

If a block selects bi-directional prediction and an associated reference block (e.g., one of its reference blocks) includes a sub-block selecting sub-block transform (SBT) for prediction, the block may be split following the SBT split selected by this sub-block inside the used reference block.

If a block selects bi-directional prediction and an associated reference block (e.g., one of this reference blocks) includes a sub-block selecting spatial geometric partition mode (SGPM) for prediction, the block may be split following the SGPM split selected by the sub-block inside the used reference block.

FIG. 9 illustrates an example split of the inter prediction of the current block for VPIM derivation (e.g., following the split of one of its reference block involved in the prediction process).

The advanced directions may be mapped to the transform index. For example, a direct mapping may be used to map the advanced directions to the transform index.

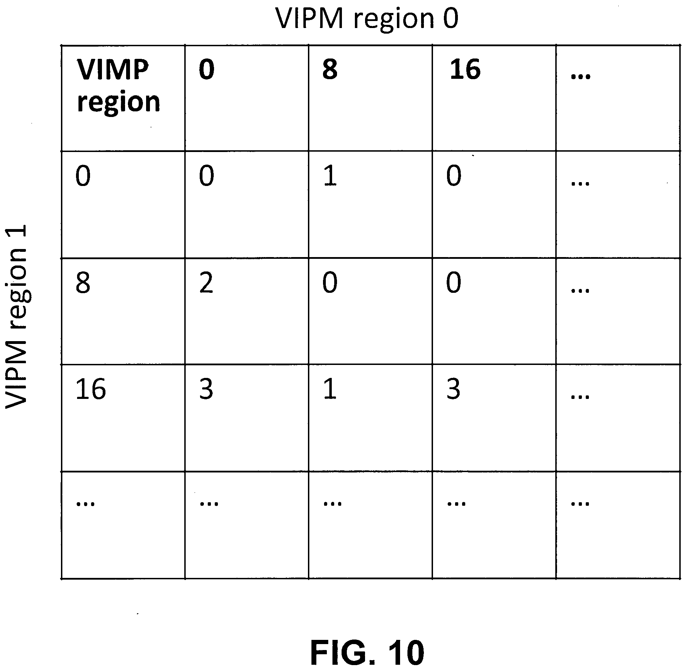

FIG. 10 illustrates an example mapping from VIPM to LFNST or NSPT index for one direction.

From a VIPM direction (or a quantified value of the direction) an index or a list of ranked indexes of secondary transform may be associated (e.g., as shown in FIG. 10). At the decoder, the index in the list may be decoded and the transform index may be recovered.

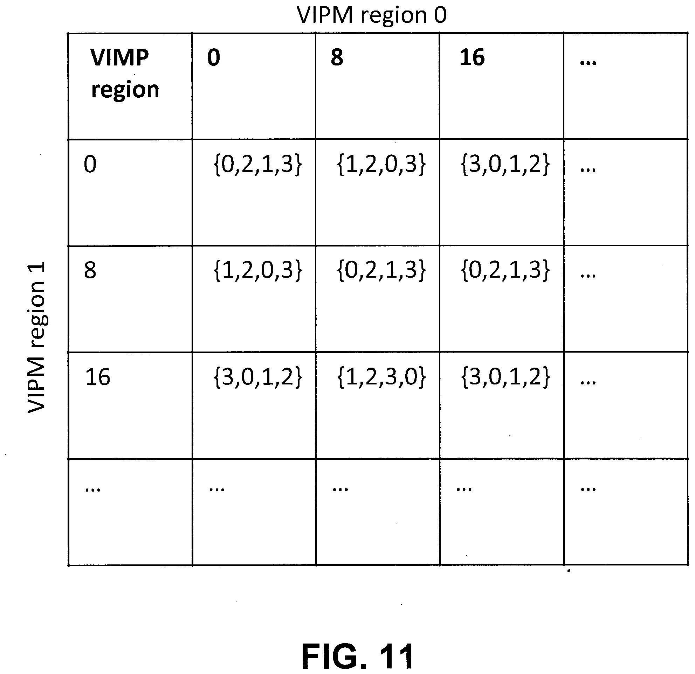

FIG. 11 illustrates an example mapping from VIPM to the LFNST or NSPT index for two directions.

If several directions are used, a multidimensional LUT may be used to associate a set of directions to an index or set of indexes. FIG. 11 illustrates an example in which the block has been split into two regions. In this example, the association may give a list of ranked transform index. For more than two regions, the same principle may apply with an n-dimensional LUT.

Feature(s) associated with multi-transform unit mapping are provided herein.

For example, the mapping between the directions (or the feature vector) may involve analyzing the directions vector to decide if the block is to be encoded using a TU (e.g., one TU) or a set of TUs.

For a (e.g., each) TU, the direction(s) (e.g., main direction, or set of directions) may be used to map to a transform index, as described herein.

The encoder (or decoder) may determine a third direction associated with the prediction block and a fourth direction associated with the prediction block. On a condition that an angular difference between the third direction and the fourth direction is below a threshold, the encoder (or decoder) may select the third direction. The encoder (or decoder) may determine the transform (or inverse transform) based on the first direction, the second direction, and the third direction.

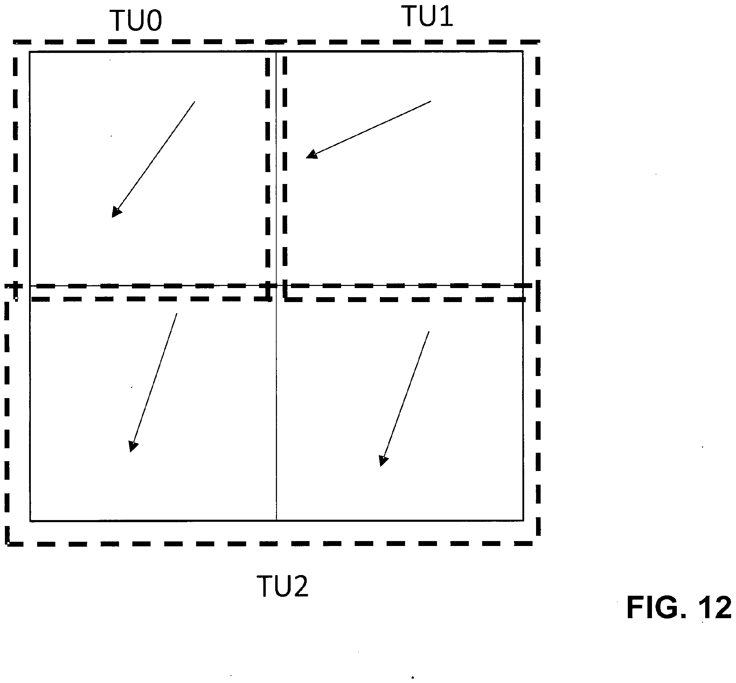

FIG. 12 illustrates an example of a multi-TU transform.

The block may be split into two or more (e.g., several) TUs (e.g., as shown in FIG. 12). For example, the directions may be analyzed into 4 sub-blocks. If the directions are close (e.g., the difference of the angles is less than a threshold), the sub-block may be set in the same TU. In FIG. 12, the top-left, bottom-left, and bottom-right may be set to be in the same TU (e.g., TU2). In this example, the top-right may be set to be in a separate TU (e.g., TU1). To keep the TU rectangular, the top-left block may be set in a separate TU (e.g., TU0). The block may be encoded using the three TUs (e.g., TU0, TU1, TU2). For a TU (e.g., each of these TUs), an index of transform may be deduced from the direction(s) (e.g., the main direction or set of directions), as described herein.

Advanced mapping may be used.

If a full-featured vector is used, a more advanced mapping may be used to recover the transform index. For example, the feature vector may be used as an input of a learning-based algorithm (e.g., an SVM or Multi-layer perceptron (MLP)). The algorithm may map the input vector to the index (or a list of indexes) of transforms. The mapping from the feature vector to the transform index (or list of transform indexes) may be encoded in a multi-dimensional LUT.

Advanced directions or feature vector may be used to learn new transforms.

The transform (or secondary transforms) associated with a direction or set or directions (e.g., a feature vector) may be learned per direction (or per set of directions or feature vector). For example, if, for a (e.g., each) block, a vector of dimension 4 with values in the range [0,8] is extracted (e.g., as described herein, for example, multi-directions or feature vector), the transform may be learned for the values (e.g., for each values) of the vector (e.g., which may represent 4096 transforms) from the residual (or the transformed residual) of the blocks on a large dataset of blocks and associated residual. The transform may be the transform that minimizes the coding cost of the transformed coefficients.

The following is a non-exhaustive list of numbered examples which may or may not be claimed:

Example 1. A method for video decoding comprising: obtaining a prediction block of a video block; determining a first direction associated with the prediction block and a second direction associated with the prediction block; determining an inverse transform based on the first direction and the second direction; and performing inverse transform for the video block based on the inverse transform.

Example 2. The method of Example 1, wherein obtaining the prediction block of the video block comprises determining the prediction block based on a reference block of the video block.

Example 3. The method of Example 1, wherein the method further comprises determining a third direction associated with the prediction block and a fourth direction associated with the prediction block; and on a condition that an angular difference between the third direction and the fourth direction is below a threshold, selecting the third direction, wherein determining the inverse transform based on the first direction and the second direction is further based on the third direction.

Example 4. The method of Example 1, wherein determining the inverse transform based on the first direction and the second direction comprises: obtaining a mapping between direction sets and inverse transform indices, a direction set comprising a plurality of directions; determining an inverse transform index based on the mapping and a direction set that comprises the first direction and the second direction; and determining the inverse transform based on the inverse transform index.

Example 5. The method of Example 1, wherein determining at least one inverse transform based on the first direction and the second direction comprises: obtaining a mapping between direction sets and candidate inverse transform index lists, a direction set comprising a plurality of directions; determining a candidate inverse transform index list for the video block based on the mapping and a direction set that comprises the first direction and the second direction; obtaining an inverse transform candidate index for the video block; and selecting the inverse transform from the candidate inverse transform index list based on the inverse transform candidate index.

Example 6. A video encoding device comprising a processor configured to: obtain a prediction block of a video block; determine a first direction associated with the prediction block and a second direction associated with the prediction block; select a transform based on the first direction and the second direction; and perform transform for the video block based on the transform.

Example 7. The video encoding device of Example 6, wherein the processor is further configured to: determine a first region of the prediction block and a second region of the prediction block based, at least in part, on a prediction mode of the video block, wherein the first direction is associated with the first direction, and the second direction is associated with the second region.

Example 8. The video encoding device of Example 6 or 7, wherein processor is further configured to: determine a first region of the prediction block and a second region of the prediction block based, at least in part, on a size of the video block, wherein the first direction is associated with the first direction, and the second direction is associated with the second region.

Example 8. The video encoding device of any one of Examples 6-8, wherein the processor being configured to select the transform based on the first direction and the second direction comprises the processor being configured to: obtain a feature vector based on the first direction and the second direction; and select the transform based on the feature vector.

Example 9. The video encoding device of any one of Examples 6-8, wherein the first direction is associated with a first region of the prediction block, the second direction is associated with a second region of the prediction block, and the processor is further configured to determine a mapping between direction indices and transform indices, and wherein the processor being configured to determine the mapping between the direction indices and the transform indices comprises the processor being configured to: determine a first index indicative of a first transform based on a first histogram of directions associated with the first region of the prediction block; and determine a second index indicative of a second transform based on a second histogram of directions associated with the second region of the prediction block.

Example 10. The video encoding device of Example 6, wherein the processor being configured to obtain the prediction block of the video block comprises the processor being configured to determine the prediction block based on a reference block of the video block.

Example 11. The video encoding device of Example 6, wherein the processor is further configured to: determine a third direction associated with the prediction block and a fourth direction associated with the prediction block; and on a condition that an angular difference between the third direction and the fourth direction is below a threshold, select the third direction, wherein the processor being configured to select the transform based on the first direction and the second direction is further based on the third direction.

Example 12. The video encoding device of Example 6, wherein the processor being configured to select the transform based on the first direction and the second direction comprises the processor being configured to: obtain a mapping between direction sets and transform indices, a direction set comprising a plurality of directions; determine a transform index based on the mapping and a direction set that comprises the first direction and the second direction; and select the transform based on the transform index.

Example 13. The video encoding device of Example 6, wherein the processor being configured to select the transform based on the first direction and the second direction comprises the processor being configured to: obtain a mapping between direction sets and candidate transform index lists, a direction set comprising a plurality of directions; determine a candidate transform index list for the video block based on the mapping and a direction set that comprises the first direction and the second direction; obtain a transform candidate index for the video block; and select the transform from the candidate transform index list based on the transform candidate index.

Example 14. A method for video encoding, the method comprising: obtaining a prediction block of a video block; determining a first direction associated with the prediction block and a second direction associated with the prediction block; selecting a transform based on the first direction and the second direction; and performing transform for the video block based on the transform.

Example 15. The method of Example 14, wherein the method further comprises: determining a first region of the prediction block and a second region of the prediction block based, at least in part, on a prediction mode of the video block, wherein the first direction is associated with the first direction, and the second direction is associated with the second region.

Example 16. The method of Example 14 or 15, wherein the method further comprises: determining a first region of the prediction block and a second region of the prediction block based, at least in part, on a size of the video block, wherein the first direction is associated with the first direction, and the second direction is associated with the second region.

Example 17. The method of any one of Examples 14-16, wherein selecting the transform based on the first direction and the second direction comprises: obtaining a feature vector based on the first direction and the second direction; and selecting the transform based on the feature vector.

Example 18. The method of any one of Examples 14-16, wherein the first direction is associated with a first region of the prediction block, the second direction is associated with a second region of the prediction block, and the method further comprises determining a mapping between direction indices and transform indices, and wherein determining the mapping between the direction indices and the transform indices comprises: determining a first index indicative of a first transform based on a first histogram of directions associated with the first region of the prediction block; and determining a second index indicative of a second transform based on a second histogram of directions associated with the second region of the prediction block.

Example 19. The method of Example 14, wherein obtaining the prediction block of the video block comprises determining the prediction block based on a reference block of the video block.

Example 20. The method of Example 14, wherein the method further comprises: determining a third direction associated with the prediction block and a fourth direction associated with the prediction block; and on a condition that an angular difference between the third direction and the fourth direction is below a threshold, selecting the third direction, wherein selecting the transform based on the first direction and the second direction is further based on the third direction.

Example 21. The method of Example 14, wherein selecting the transform based on the first direction and the second direction comprises: obtaining a mapping between direction sets and transform indices, a direction set comprising a plurality of directions; determining a transform index based on the mapping and a direction set that comprises the first direction and the second direction; and selecting the transform based on the transform index.

Example 22. The method of Example 14, wherein selecting the transform based on the first direction and the second direction comprises: obtaining a mapping between direction sets and candidate transform index lists, a direction set comprising a plurality of directions; determining a candidate transform index list for the video block based on the mapping and a direction set that comprises the first direction and the second direction; obtaining a transform candidate index for the video block; and selecting the transform from the candidate transform index list based on the transform candidate index.

Example 23. A method for video decoding comprising: obtaining a prediction block of a video block; determining a first texture orientation information associated with the prediction block and a second texture orientation information associated with the prediction block; determining an inverse transform based on the first texture orientation information and the second texture orientation information associated with the prediction block; and performing inverse transform for the video block based on the inverse transform.

Example 24. A device for video decoding comprising a processor configured to: obtain a prediction block of a video block; determine a first texture orientation information associated with the prediction block and a second texture orientation information associated with the prediction block; determine an inverse transform based on the first texture orientation information and the second texture orientation information associated with the prediction block; and perform inverse transform for the video block based on the inverse transform

Example 25. A method for video encoding comprising: obtaining a prediction block of a video block; determining a first texture orientation information associated with the prediction block and a second texture orientation information associated with the prediction block; selecting a transform based on the first texture orientation information and the second texture orientation information associated with the prediction block; and performing transform for the video block based on the transform.

Example 26. A device for video encoding comprising a processor configured to: obtain a prediction block of a video block; determine a first texture orientation information associated with the prediction block and a second texture orientation information associated with the prediction block; select a transform based on the first texture orientation information and the second texture orientation information associated with the prediction block; and perform transform for the video block based on the transform.

Example 27. The device or method of any one of Examples 23-26, wherein the first texture orientation information associated with the prediction block comprises a first direction associated with the prediction block and the second texture orientation information associated with the prediction block comprises a second direction associated with the prediction block.

Example 28. The device or method of any one of Examples 23 -26, wherein the first texture orientation information associated with the prediction block comprises a first direction associated with the prediction block weighted by a first gradient strength, and the second texture orientation information associated with the prediction block comprises a second direction associated with the prediction block weighted by a second gradient strength.

Example 29. Video data comprising information representative of the video block encoded in accordance with the of any one of Examples 14-22 and 25.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1.  A video decoding device comprising:
    a processor configured to:

    obtain a prediction block of a video block;
    determine a first direction associated with the prediction block and a second direction associated with the prediction block;
    determine an inverse transform based on the first direction and the second direction; and
    perform inverse transform for the video block based on the inverse transform.

2.  The video decoding device of claim 1, wherein the processor is further configured to:
    determine a first region of the prediction block and a second region of the prediction block based, at least in part, on a prediction mode of the video block, wherein the first direction is associated with the first region, and the second direction is associated with the second region.

3.  The video decoding device of claim 1 or 2, wherein the processor is further configured to:
    determine a first region of the prediction block and a second region of the prediction block based, at least in part, on a size of the video block, wherein the first direction is associated with the first region, and the second direction is associated with the second region.

4.  The video decoding device of any one of claims 1-3, wherein the processor being configured to determine the inverse transform based on the first direction and the second direction comprises the processor being configured to:

    obtain a feature vector based on the first direction and the second direction; and
    determine the inverse transform based on the feature vector.

5.  The video decoding device of any one of claims 1-3, wherein the first direction is associated with a first region of the prediction block, the second direction is associated with a second region of the prediction block, and the processor is further configured to determine a mapping between direction indices and inverse transform indices, and wherein the processor being configured to determine the mapping between the direction indices and the inverse transform indices comprises the processor being configured to:

    determine a first index indicative of a first inverse transform based on a first histogram of directions associated with the first region of the prediction block; and
    determine a second index indicative of a second inverse transform based on a second histogram of directions associated with the second region of the prediction block.

6.  The video decoding device of claim 1, wherein the processor being configured to obtain the prediction block of the video block comprises the processor being configured to determine the prediction block based on a reference block of the video block.

7.  The video decoding device of any one of claims 1-6, wherein the processor is further configured to:

determine a third direction associated with the prediction block and a fourth direction associated with the prediction block; and

on a condition that an angular difference between the third direction and the fourth direction is below a threshold, select the third direction, wherein the processor being configured to determine the inverse transform based on the first direction and the second direction is further based on the third direction.

8. The video decoding device of any one of claims 1-7, wherein the processor being configured to determine the inverse transform based on the first direction and the second direction comprises the processor being configured to:

obtain a mapping between direction sets and inverse transform indices, a direction set comprising a plurality of directions;

determine an inverse transform index based on the mapping and a direction set that comprises the first direction and the second direction; and

determine the inverse transform based on the inverse transform index.

9. The video decoding device of claim 1, wherein the processor being configured to determine at least one inverse transform based on the first direction and the second direction comprises the processor being configured to:

obtain a mapping between direction sets and candidate inverse transform index lists, a direction set comprising a plurality of directions;

determine a candidate inverse transform index list for the video block based on the mapping and a direction set that comprises the first direction and the second direction;

obtain an inverse transform candidate index for the video block; and

select the inverse transform from the candidate inverse transform index list based on the inverse transform candidate index.

10. A method for video decoding, the method comprising:

obtaining a prediction block of a video block;

determining a first direction associated with the prediction block and a second direction associated with the prediction block;

determining an inverse transform based on the first direction and the second direction; and

performing inverse transform for the video block based on the inverse transform.

11. The method of claim 10, wherein the method further comprises:

determining a first region of the prediction block and a second region of the prediction block based, at least in part, on a prediction mode of the video block, wherein the first direction is associated with the first region, and the second direction is associated with the second region.

12. The method of claim 10 or 11, wherein the method further comprises:

determining a first region of the prediction block and a second region of the prediction block based, at least in part, on a size of the video block, wherein the first direction is associated with the first region, and the second direction is associated with the second region.

13. The method of any one of claims 10-12, wherein determining the inverse transform based on the first direction and the second direction comprises:

obtaining a feature vector based on the first direction and the second direction; and

determining the inverse transform based on the feature vector.

14. The method of any one of claims 10-12, wherein the first direction is associated with a first region of the prediction block, the second direction is associated with a second region of the prediction block, and the method further comprises determining a mapping between direction indices and inverse transform indices, and wherein determining the mapping between the direction indices and the inverse transform indices comprises:

determining a first index indicative of a first inverse transform based on a first histogram of directions associated with the first region of the prediction block; and

determining a second index indicative of a second inverse transform based on a second histogram of directions associated with the second region of the prediction block.

**15.** A computer program product which is stored on a non-transitory computer readable medium and comprises program code instructions for implementing the steps according to at least one of claims 10 to 14 when executed by a processor.

FIG. 1A

116

102

122

120
Transceiver

124
Speaker/
Microphone

134
Power
Source

126
Keypad

118
Processor

136
GPS
Chipset

128
Display/
Touchpad

138
Peripherals

130
Non-
Removable
Memory

132
Removable
Memory

# FIG. 1B

**FIG. 1C**

FIG. 1D

EP 4 637 144 A1

**FIG. 2**

EP 4 637 144 A1

**300**

**FIG. 3**

EP 4 637 144 A1

FIG. 4

Matrix-Vector-Multiplication

MIP prediction up-sampling

DIMD Derivation

amplitude

Intra Prediction Mode

**FIG. 5**

**FIG. 6**

**FIG. 7**

EP 4 637 144 A1

**FIG. 8**

| bins | value | q |
|------|-------|---|
| 0 | 44 | 4 |
| 1 | 82 | 8 |
| 2 | 18 | 2 |
| 3 | 8 | 1 |
| 4 | 17 | 2 |
| 5 | 9 | 1 |
| 6 | 6 | 1 |
| 7 | 19 | 2 |

FIG. 9

split of the reference block 0 via its
selected ISP for intra prediction

split of the prediction of the
current block for VIPM derivation

EP 4 637 144 A1

VIPM region 0

| VIMP region | 0 | 8 | 16 | ... |
|---|---|---|---|---|
| 0 | 0 | 1 | 0 | ... |
| 8 | 2 | 0 | 0 | ... |
| 16 | 3 | 1 | 3 | ... |
| ... | ... | ... | ... | ... |

VIPM region 1

**FIG. 10**

EP 4 637 144 A1

EP 4 637 144 A1

VIPM region 0

| VIMP region | 0 | 8 | 16 | ... |
|---|---|---|---|---|
| 0 | {0,2,1,3} | {1,2,0,3} | {3,0,1,2} | ... |
| 8 | {1,2,0,3} | {0,2,1,3} | {0,2,1,3} | ... |
| 16 | {3,0,1,2} | {1,2,3,0} | {3,0,1,2} | ... |
| ... | ... | ... | ... | ... |

VIPM region 1

# FIG. 11

FIG. 12

# EUROPEAN SEARCH REPORT

**Application Number**

EP 24 31 5168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHAO (BYTEDANCE) L ET AL: "Non-EE2: Improvements on Inter LFNST/NSPT", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0219 11 April 2024 (2024-04-11), XP030317669, Retrieved from the Internet: URL:https://jvet-experts.org/doc_end_user/documents/34_Rennes/wg11/JVET-AH0219-v2.zip JVET-AH0219-v2.docx [retrieved on 2024-04-11] | 1,10,15 | INV. H04N19/12 H04N19/176 H04N19/593 H04N19/61 H04N19/119 |
| A | * the whole document * | 2-9, 11-14 | |
|  | ----- | | |
| X | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG2025 ; m66954 29 March 2024 (2024-03-29), XP030316747, Retrieved from the Internet: URL:https://jvet-experts.org/doc_end_user/documents/33_Teleconference/wg11/JVET-AG2025-v1.zip JVET-AG2025-v1.docx [retrieved on 2024-03-29] * sections 3.1.5, 3.1.17, 3.3.4, 3.3.5, 3.3.6, 3.3.7, 3.3.8 * | 1-15 | **TECHNICAL FIELDS SEARCHED (IPC)** H04N |
|  | ----- | | |

The present search report has been drawn up for all claims

| Place of search | Date of completion of the search | Examiner |
|---|---|---|
| The Hague | 7 October 2024 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)